# EUROPEAN PATENT SPECIFICATION

(11) **EP 4 175 236 B1**
(45) Date of publication and mention of the grant of the patent: **13.05.2026**
(21) Application number: 21205622.0
(22) Date of filing: 29.10.2021
(51) Int. Cl.: H04L 67/12, H04W 4/38, H04W 4/70

(54) **METHOD AND IOT-DATA SINK DEVICE FOR MANAGING NETWORK STRUCTURE CHANGES OF AN IOT-NETWORK WITH AT LEAST ONE IOT-DATA SOURCE DEVICE**
VERFAHREN UND IOT-DATENSENKENVORRICHTUNG ZUR VERWALTUNG VON NETZSTRUKTURÄNDERUNGEN EINES IOT-NETZWERKES MIT MINDESTENS EINER IOT-DATENQUELLENVORRICHTUNG
PROCÉDÉ ET DISPOSITIF DE COLLECTEUR DE DONNÉES D'IDO POUR LA GESTION DES CHANGEMENTS DE STRUCTURE DE RÉSEAU D'UN RÉSEAU D'IDO AVEC AU MOINS UN DISPOSITIF SOURCE DE DONNÉES D'IDO

(43) Date of publication of application: 03.05.2023
(73) Proprietor: Siemens Aktiengesellschaft, 80333 München (DE)
(72) Inventor: Gatzhammer, Bernhard, 85276 Pfaffenhofen a.d.Ilm (DE); Oeh, Dominik, 96146 Altendorf (DE); Winhuysen, Jan, 80469 München (DE)
(74) Representative: Siemens Patent Attorneys

(56) References cited:
- US-A1- 2015 019 342
- US-A1- 2016 036 764
- US-A1- 2018 109 650
- US-A1- 2020 120 032

## Description

The invention refers to a method according to independent claim 1 for managing network structure changes of an IoT-network with at least one IoT-data source device, a computer-implemented tool according to independent claim 6, and an IoT-data sink device according to independent claim 7 for managing network structure changes of an IoT-network with at least one IoT-data source device.

According to https://en.wikipedia.org/wiki/Internet of things in the version of October 26, 2021, Internet of Things - (IoT) describes physical objects or groups of such objects that are embedded with sensors, processing ability, software, and other technologies, and that connect and exchange data with other devices and systems over the Internet or other communications networks.

IoT-devices as part of an IoT-network, formed in buildings or business premises - such as shop-floors, factory sites, plants, etc., are often required to interact with other devices within the network in order to obtain data, e.g. in the form of values, commands, instructions etc., required to fulfill their task. From the data-obtaining-perspective within the IoT-network the IoT-devices are assigned to or include data sources or they are data sinks. Consequently, the IoT-devices could be divided into IoT-data source devices and IoT-data sink devices.

Besides this classification possible tasks within the IoT-network are the commissioning of devices and changes of data (according to the "source/sink" terminology the data sources) and consumers (according to the "source/sink" terminology the data sinks) at which existing data might be adapted or retired and replaced by new data. These are network structure changes which have to be managed. So for example during commissioning in business premises IoT-devices are introduced to each other, and relations are being defined manually.

For replacing the manual configuration of IoT-devices relationships with an automated approach it has to be solved the main technical problem how to find data-providing sources, e.g., sensors built into devices, and connect them to data consuming applications running on other devices. Such an approach would be the fulfillment of data needs for those applications and the approach needs to take the dynamics related to the network structure changes mentioned above into account and provide a suitable solution.

Up to now, there are several approaches to solve such a common problem:
- During up-front engineering a static configuration is created before the device is commissioned. The configuration is pre-loaded and activated during commissioning. For every change in configuration an updated configuration must be uploaded to the device and activated.
- With on-site configuration, the configuration must be created live on-site by a trained engineer. For every change in configuration the engineer must return on-site and update the device.
- Hardware solutions directly connect data sources and consumers (data sinks) by a physical connection.

Common for all solutions is the need of manual labor and the static nature of the configuration. So for example, if the device or network changes, the configuration must change as well.

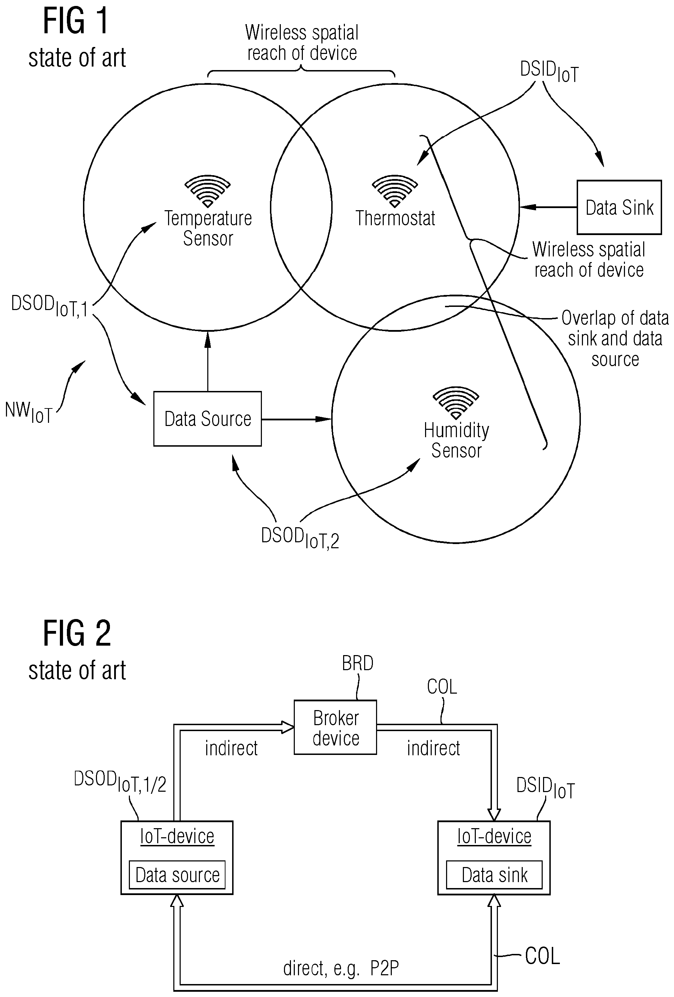

FIGURE 1 shows - as state of art - an IoT-network NW_{IoT} formed in a building as a wireless peer-to-peer-network with two IoT-data source devices, a first IoT-data source device DSOD_{IoT,1} and a second IoT-data source device DSOD_{IoT,2}, and one IoT-data sink device DSID_{IoT}, which for example has to be commissioned within the IoT-network NW_{IoT}. According to a building scenario with an environment of the IoT-network NW_{IoT}, in which
- the IoT-data sink device DSID_{IoT} is for instance a thermostat being supposed to control temperatures but with no built-in temperature sensor so that no temperature data about measured temperatures are available in a data sink being assigned to the thermostat,
- the first IoT-data source device DSOD_{IoT,1} is a temperature sensor with temperature data in a data source assigned to the temperature sensor and
- the second IoT-data source device DSOD_{IoT,2} is a humidity sensor with humidity data in a data source assigned to the humidity sensor.

According to the FIGURE 1 there are two IoT-data source devices DSOD_{IoT,1}, DSOD_{IoT,2}, which are part of the IoT-network NW_{IoT}. But it also possible that the IoT-network NW_{IoT} includes more or less IoT-data source devices.

The IoT-data sink device DSID_{IoT} is arranged in the IoT-net-work NW_{IoT} such that the device is located due to the wireless peer-to-peer-network character of the IoT-network NW_{IoT} each in a wireless spatial reach to the first IoT-data source device DSOD_{IoT,1} as the temperature sensor and the second IoT-data source device DSOD_{IoT,2} as the humidity sensor.

FIGURE 2 shows - as state of art - in a principle depiction how a communication via a communication link COL between the IoT-data sink device DSID_{IoT} and the first and second IoT-data source devices DSOD_{IoT,1}, DSOD_{IoT,2} can be taken place in the IoT-network NW_{IoT} realized as the wireless peer-to-peer-network. So according to the depiction a direct communication, e.g. peer-to-peer (P2P), or an indirect communication, e.g. via a broker device BRD, is possible.

US 2015/0019342 A1 discloses a recommendation engine for IoT environments that processes contextual information to deliver personalized, real-time recommendations. It considers user-device associations based on profiles, usage patterns, proximities, and states. Recommendations can be shared, uploaded to a server, or informed by data from similar users or friends, creating a dynamic feedback system for enhanced personalization.

It is an objective of the invention to propose a method and an IoT-data sink device for managing network structure changes of an IoT-network with at least one IoT-data source device, in which the network structure changes are managed automatically.

This objective is solved with regard to a computer-implemented method defined in the preamble of claim 1 by the features in the characterizing part of claim 1.

The objective is further solved with regard to a computer-implemented-tool by claim 6.

Moreover, the objective is solved with regard to an IoT-data sink device defined in the preamble of claim 7 by the features in the characterizing part of claim 7.

The main idea of the invention according to the claims 1, 6 and 7 in order to manage network structure changes of an IoT-network with at least one IoT-data source device, in which the network structure is changeable due to commissioning of an IoT-data sink device within the IoT-network by configuring the IoT-data sink device to be commissioned or by adapting or retiring and replacing current data of the IoT-data sink device, is to (i) prioritize information about a location of the IoT-data source device and information about quality attributes of IoT-data source device data, being sourced by each IoT-data source device and being requested and fetched from each IoT-data source device, via a communication link, in particular by a PUSH- or PULL transmission mechanism, with a prioritization algorithm such that
- a weighted proximity metric is computed based on the location information and the data quality attribute information of the respective IoT-data source device, said location information and said data quality attribute information corresponding to input parameters, wherein weights for each input parameter of the prioritization algorithm is pre-configured for the IoT-data sink device,
- each IoT-data source device is ranked according to the weighted proximity metric computed for the IoT-data source device, and (ii) to select the IoT-data source device ranked highest, from which its IoT-data source device data is fetched via the communication link, in particular by a PUSH- or PULL transmission mechanism, and wherein the fetched is used to configure the IoT-data sink device due to its commissioning or to adapt or retire and replace current IoT-data sink device data of the IoT-data sink device.

The goal of the proposed solution is to replace a manual configuration of IoT-device relationships with an automated approach focused on IoT-device (logical) proximity and further data quality attributes, wherein the technical problems outlined in the introductory part are addressed.

The proposed solution has the following advantages compared to the state of the art outlined in the introductory part.
- There is a reduction of manual effort or labor, in particular concerning dynamic environments.
- There is a reduction of end-user configuration-complexity, e.g. there are no rigid associations between data sources devices and the data sink devices, which are all manual managed.
- Error tolerance, e.g. data sources devices lost, redundancy.
- Cost savings regarding all mirror lines (points, aspects) above.

Advantageous developments of this idea are given in the dependent claims.

According to the claims 2 and 8, it is advantageous that the location information and the data quality attribute information are described in a common format, which is understood by both the IoT-data source device and by the IoT-data sink device, such as "Web Of Things <WOT>", "Building Information Modeling <BIM>" or "Industry Foundation Classes <WOT>".

So the concrete meaning of the location information is always defined in a certain context. This context could be physical such as a room or geo position, but could as well be logical such as a position in a network topology. The location information of the data source device allows the data sink device to compute a proximity between the data source device and the data sink device.

The data quality attribute information are providing additional information about the data, which could be on measurement accuracy, availability, refresh rate, or cost of usage.

Furthermore, it is advantageous according to the claims 4 and 9 if the steps **a)** to **b)** regarding claim and if the steps **a1)** to **a2)** regarding claim 9 are repeated to dynamically capture at least one new IoT-data source device joining the IoT-network. The repetition is executed preferentially either periodically or in case of issues.

Moreover, advantageous further developments of the invention arise out of the following description of a preferred embodiment of the invention and based on the FIGURES 1 and 2 showing each a state of art according to FIGURES 3 to 5. They show:

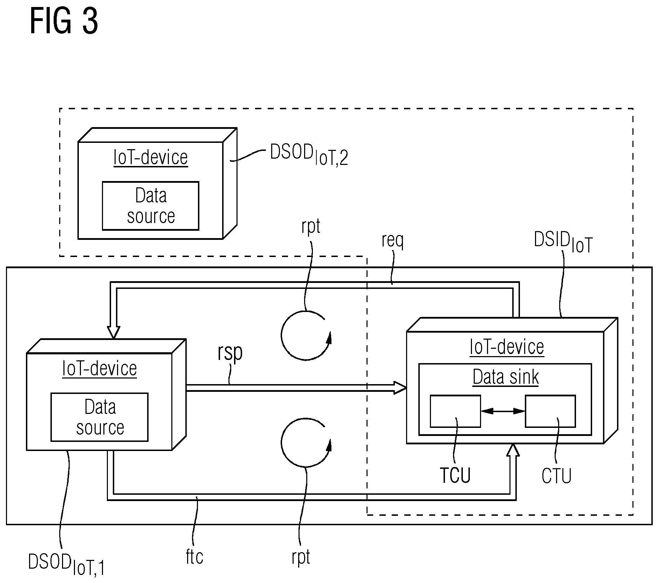

FIGURE 3 a principle chart illustrating required steps to be executed by the data sink device in order to obtain data of the available data source devices,

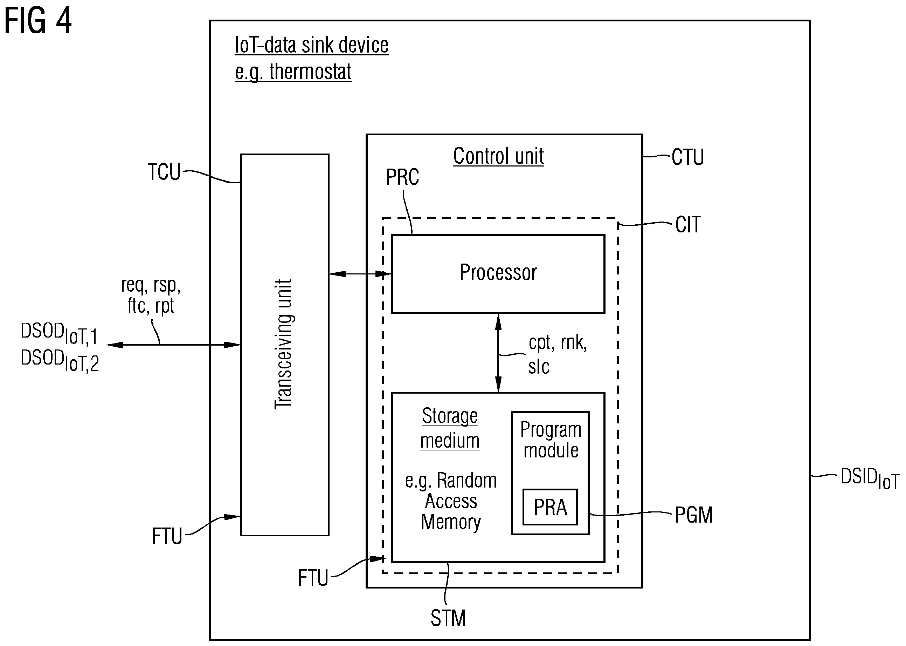

FIGURE 4 a principle design of the data sink device for processing the obtained data of the available data source devices according to the FIGURE 3,

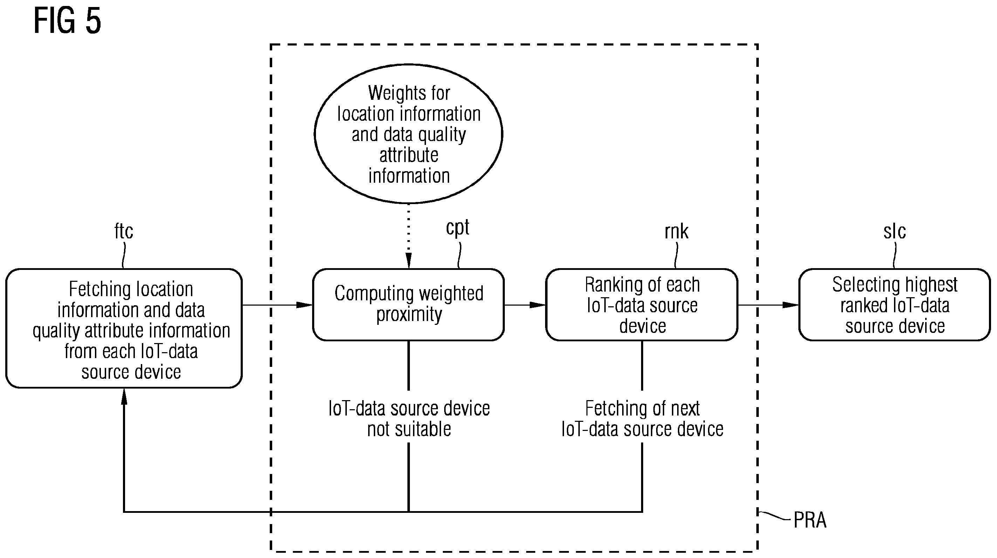

FIGURE 5 execution steps of a prioritization algorithm used in the data sink device according to the FIGURE 4 to process the obtained data of the available data source devices according to the FIGURE 3.

FIGURE 3 shows a principle chart illustrating required steps to be executed by the data sink device DSID_{IoT} in order to obtain data of the available two data source devices DSOD_{IoT,1}, DSOD_{IoT,2}. In general, the IoT-data source devices are defined by their location, the data they provide, and additional data quality attributes. The concrete meaning of a data source location is always defined in a certain context. This context could be physical such as a room or geo position, but could as well be logical such as a position in a network topology. Due the location of the data source devices DSOD_{IoT,1}, DSOD_{IoT,2} the data sink device DSID_{IoT} can compute a proximity between the data sink device DSID_{IoT} and the data source devices DSOD_{IoT,1}, DSOD_{IoT,2}. The data provided by the data source devices DSOD_{IoT,1}, DSOD_{IoT,2} is described in a common format which both understand, e.g. "Web Of Things <WOT>", "Building Information Modeling <BIM>" or "Industry Foundation Classes <WOT>". The data quality attributes are providing additional information about the data, which could be on measurement accuracy, availability, refresh rate, or cost of usage.

The FIGURE 3 illustrates exemplarily the data receipt from the first data source devices DSOD_{IoT,1} and the steps how the data is obtained. In the same way the data of the second data source device DSOD_{IoT,2} can be obtained. This is indicated by the area outlined by dashed lines.

The data sink device DSID_{IoT} with a control unit CTU and a transceiving unit TCU, which are connected to each other, and which represent the data sink of the data sink device DSID_{IoT} as a data consuming device. The steps are carried out by the data consuming device with every data source devices DSOD_{IoT,1}, DSOD_{IoT,2} carrying the data source.

So, in a first step a control unit CTU sends via the transceiving unit TCU a request by which the data sink device DSID_{IoT} is requesting req information about a location INF_{loc} of the first IoT-data source device DSOD_{IoT,1} and information about quality attributes of IoT-data source device data INF_{dqa} being sourced by the first IoT-data source device DSOD_{IoT,1}.

Such a request based on the illustration in the FIGURE 1 could be look like this:
The thermostat in the FIGURE 1 is supposed to control temperature, but has no built-in temperature measurement sensor. It can now ask or request "Who is nearby and knows the current temperature" to find out about temperature. The thermostat can repeatably ask this question to respond to dynamic changes in the environment e.g., another temperature sensor being added.

In a second step the first IoT-data source device DSOD_{IoT,1} responds rsp to the request, so that the control unit CTU fetches ftc in a third step via the transceiving unit TCU requested location information INF_{loc} and the requested data quality attribute information INF_{dqa} due to responding rsp by from the first IoT-data source device DSOD_{IoT,1}. This fetching can be carried out preferably by a PUSH- or PULL transmission mechanism via the communication link COL shown in the FIGURE 2. Via the communication link COL also the request and the response are transferred.

In a fourth step, when the data is fetched from each data source devices DSOD_{IoT,1}, DSOD_{IoT,2}, there will be a prioritizing processing executed by the control unit CTU of the data sink device DSID_{IoT}. This prioritizing processing will be explained below according to FIGURES 4 and 5.

When the prioritizing processing is executed so far, it is preferably possible to repeat rpt the four steps in order to dynamically capture at least one new IoT-data source device joining the IoT-network NW_{IoT} or to dynamically changing data sources. This repetition can be done also preferably either periodically or in case of issues.

FIGURE 4 shows a principle design of the data sink device DSID_{IoT} for processing the obtained data of the available data source devices according to the FIGURE 3, which are for example the two data source devices DSOD_{IoT,1}, DSOD_{IoT,2}.

According to the depicted principle design the data sink device DSID_{IoT} includes as already mentioned in the context of describing the FIGURE 3 the control unit CTU, which is connected to the transceiving unit TCU. The control unit CTU includes a Computer-implemented-tool CIT with
- a non-transitory, processor-readable storage medium STM, such as a Random Access Memory, having processor-readable program-instructions of a program module PGM for managing network structure changes of the IoT-network NW_{IoT} stored in the non-transitory, processor-readable storage medium STM,
- a processor PRC connected with the storage medium STM executing the processor-readable program-instructions of the program module PGM to manage network structure changes of the IoT-network NW_{IoT}, which is either implemented in the control unit CTU or is uploadable to the control unit CTU.

The Computer-implemented-tool CIT is nothing else than a Computer-Program-Product being designed preferably as an APP, which either can be uploaded or is already implemented on default.

With respect to the data sink device DSID_{IoT} the Computer-implemented-tool CIT of the control unit CTU) and the transceiving unit TCU form a functional unit FTU such that the information about the location INF_{loc} of the IoT-data source devices DSOD_{IoT,1}, DSOD_{IoT,2} and the information about quality attributes of the IoT-data source device data INF_{dqa}, being sourced by the IoT-data source devices DSOD_{IoT,1}, DSOD_{IoT,2} and being requested req and fetched ftc via the transceiving unit TCU from the IoT-data source devices DSOD_{IoT,1}, DSOD_{IoT,2}, via the communication link, for example by a PUSH- or PULL transmission mechanism, is prioritized prt according to the prioritizing processing within the control unit CTU with the Computer-implemented-tool CIT executing a prioritization algorithm PRA. The prioritization algorithm PRA is part of or is embedded in the program module PGM.

FIGURE 5 shows execution steps of the prioritization algorithm PRA used in the data sink device DSID_{IoT} according to the FIGURE 4 to process the obtained data of the available data source devices DSOD_{IoT,1}, DSOD_{IoT,2} according to the FIGURE 3.

The execution steps start with fetching ftc the location information INF_{loc} and the data quality attributes information INF_{dqa} from the IoT-data source devices DSOD_{IoT,1}, DSOD_{IoT,2}. With these information and based on weights for the location information INF_{loc} and the data quality attributes information INF_{dqa} a weighted proximity metric with a weighted proximity is computed cpt. The weights determine the influence of the distance to the IoT-data source devices DSOD_{IoT,1}, DSOD_{IoT,2} and of the data quality attributes. The resulting weighted proximity allows to easily rank the available data sources regarding their suitability.

If the computing provides each a suitable IoT-data source device then the suitable IoT-data source device is ranked rnk each. If the result of the computing provides that the actually computed one is not suitable another or the next IoT-data source device is fetched, which is computed correspondingly. At the end of the execution steps the IoT-data source device with the highest ranking is selected slc.

In this context with respect to the data sink device DSID_{IoT} the Computer-implemented-tool CIT of the control unit CTU and the transceiving unit TCU further form the functional unit FTU concerning the prioritization algorithm PRA such that
- the weighted proximity metric is computed cpt for the IoT-data source devices DSOD_{IoT,1}, DSOD_{IoT,2} according to which weighted proximities are computed based on the location information INF_{loc} and takes into account the data quality attribute information INF_{dqa}, wherein weights for each input parameter of the prioritization algorithm is pre-configured for the IoT-data sink device DSID_{IoT},
- the IoT-data source device DSOD_{IoT,1}, DSOD_{IoT,2} are ranked rnk according to the weighted proximity computed for the IoT-data source devices DSOD_{IoT,1}, DSOD_{IoT,2},
- the IoT-data source device of the IoT-data source devices DSOD_{IoT,1}, DSOD_{IoT,2} being ranked highest is selected slc in order to fetch its IoT-data source device data via the communication link COL, for example again by a PUSH- or PULL transmission mechanism, and to use this data for the configuration of the IoT-data sink device DSID_{IoT} due to its commissioning or to adapt or retire and replace current IoT-data sink device data of the IoT-data sink device DSID_{IoT}.

Once again when the prioritizing processing is executed so far, the formed functional unit FTU concerning the prioritization algorithm PRA is further designed such that it is preferably possible to repeat rpt the execution steps in order to dynamically capture at least one new IoT-data source device joining the IoT-network NW_{IoT} or to dynamically changing data sources. This repetition can be done also preferably either periodically or in case of issues.

In other words the data sink device DSID_{IoT} needs to regularly recalculate the data source ranking over time to respond to dynamic changes in its environment within the IoT-network, e.g. new data sources have been discovered, quality attributes change over time. These changes could not only be published by the data sources and trigger a recalculation of the ranking.

## Claims

1. Computer-implemented method for managing network structure changes of an IoT-network (NW_{IoT}) with at least one IoT-data source device (DSOD_{IoT,1}, DSOD_{IoT,2}), in which
- the network structure is changeable due to commissioning of an IoT-data sink device (DSID_{IoT}) within the IoT-network (NW_{IoT}) by configuring the IoT-data sink device (DSID_{IoT}) to be commissioned or by adapting or retiring and replacing current data of the IoT-data sink device (DSID_{IoT}),
- within the IoT-network (NW_{IoT}) between the at least one IoT-data source device (DSOD_{IoT,1}, DSOD_{IoT,2}) and the IoT-data sink device (DSID_{IoT}) each a communication link (COL), directly or indirectly via a broker device (BRD) of the IoT-network (NW_{IoT}) exists,
**characterized by**:
**a)** prioritizing (prt) information about a location (INF_{loc}) of the IoT-data source device (DSOD_{IoT,1}, DSOD_{IoT,2}) and information about quality attributes of IoT-data source device data (INF_{dqa}), being sourced by each IoT-data source device (DSOD_{IoT,1}, DSOD_{IoT,2}) and being requested (req) and fetched (ftc) from each IoT-data source device (DSOD_{IoT,1}, DSOD_{IoT,2}), via the communication link (COL), in particular by a PUSH- or PULL transmission mechanism, with a prioritization algorithm (PRA) such that
**al)** a weighted proximity metric is computed based on the location information (INF_{loc}) and the data quality attribute information (INF_{dqa}) of the respective IoT-data source device, said location information and said data quality attribute information corresponding to input parameters, wherein weights for each input parameter of the prioritization algorithm are pre-configured for the IoT-data sink device (DSID_{IoT}),
**a2)** each IoT-data source device (DSOD_{IoT,1}, DSOD_{IoT,2}) is ranked (rnk) according to the weighted proximity metric computed for the IoT-data source device (DSOD_{IoT,1}, DSOD_{IoT,2}),
**b)** selecting (slc) the IoT-data source device (DSOD_{IoT,1}, DSOD_{IoT,2}) ranked highest, from which its IoT-data source device data is fetched via the communication link (COL), in particular by a PUSH- or PULL transmission mechanism, and
wherein the fetched data is used to configure the IoT-data sink device (DSID_{IoT}) due to its commissioning or to adapt or retire and replace current IoT-data sink device data of the IoT-data sink device (DSID_{IoT}).

2. Computer-implemented method according to claim 1, **characterized in that**
the location information (INF_{loc}) and the data quality attribute information (INF_{dqa}) are described in a common format, such as "Web Of Things <WOT>", "Building Information Modeling <BIM>" or "lndustry Foundation Classes <WOT>", which is understood both by the IoT-data source device (DSOD_{IoT,1}, DSOD_{IoT,2}) and by the IoT-data sink device (DSID_{IoT}).

3. Computer-implemented method according to claim 1 or 2, **characterized in that**
the steps **a)** to **b)** are repeated (rpt) to dynamically capture at least one new IoT-data source device joining the IoT-network (NW_{IoT}).

4. Computer-implemented method according to one of the claims 1 to 3, **characterized in that**
the IoT-network (NW_{IoT}) with the at least one IoT-data source device (DSOD_{IoT,1}, DSOD_{IoT,2}) and the IoT-data sink device (DSID_{IoT}) communicating with each other via the communication link (COL) is a wireless peer-to-peer-network.

5. Computer-implemented method according to one of the claims 1 to 4, **characterized in that**
the IoT-data source device (DSOD_{IoT,1}, DSOD_{IoT,2}), is a temperature sensor or a humidity sensor and the IoT-data sink device (DSID_{IoT}) is a thermostat.

6. Computer-implemented-tool (CIT), for carrying out the computer-implemented method according to one of the claims 1 to 5, comprising
- a non-transitory, processor-readable storage medium (STM) having processor-readable program-instructions of a program module (PGM) for carrying out the computer-implemented method stored in the non-transitory, processor-readable storage medium (STM) and
- a processor (PRC) connected with the storage medium (STM) executing the processor-readable program-instructions of the program module (PGM) to carry out the computer-implemented method.

7. IoT-data sink device (DSID_{IoT}) for managing network structure changes of an IoT-network (NW_{IoT}) with at least one IoT-data source device (DSOD_{IoT,1}, DSOD_{IoT,2}), in which
- the network structure is changeable due to commissioning of the IoT-data sink device (DSID_{IoT}) within the IoT-network (NW_{IoT}) by configuring the IoT-data sink device (DSID_{IoT}) to be commissioned or by adapting or retiring and replacing current data of the IoT-data sink device (DSID_{IoT}),
- within the IoT-network (NW_{IoT}) between the at least one IoT-data source device (DSOD_{IoT,1}, DSOD_{IoT,2}) and the IoT-data sink device (DSID_{IoT}) each a communication link (COL), directly or indirectly via a broker device (BRD) of the IoT-network (NW_{IoT}) exists,
**characterized by**:
**a)** a control unit (CTU), which is connected to a transceiving unit (TCU) and in which a Computer-implemented-tool (CIT) with
- a non-transitory, processor-readable storage medium (STM) having processor-readable program-instructions of a program module (PGM) for managing network structure changes of the IoT-network (NW_{IoT}) stored in the non-transitory, processor-readable storage medium (STM),
- a processor (PRC) connected with the storage medium (STM) executing the processor-readable program-instructions of the program module (PGM) to manage network structure changes of the IoT-network (NW_{IoT}), is implemented or uploadable, wherein the Computer-implemented-tool (CIT) of the control unit (CTU) and the transceiving unit (TCU) form a functional unit (FTU) such that
**a1)** information about a location (INF_{loc}) of the IoT-data source device (DSOD_{IoT,1}, DSOD_{IoT,2}) and information about quality attributes of IoT-data source device data (INF_{dqa}), being sourced by each IoT-data source device (DSOD_{IoT,1}, DSOD_{IoT,2}) and being requested (req) and fetched (ftc) via the transceiving unit (TCU) from each IoT-data source device (DSOD_{IoT,1}, DSOD_{IoT,2}), via the communication link (COL), in particular by a PUSH- or PULL transmission mechanism, is prioritized (prt) within the control unit (CTU) with the Computer-implemented-tool (CIT) executing a prioritization algorithm (PRA) such that
**a11)** a weighted proximity metric is computed based on the location information (INF_{loc}) and the data quality attribute information (INF_{dqa}) of the respective IoT-data source device, said location information and said data quality attribute information corresponding to input parameters , wherein weights for each input parameter of the prioritization algorithm are pre-configured for the IoT-data sink device (DSID_{IoT}),
**a12)** each IoT-data source device (DSOD_{IoT,1}, DSOD_{IoT,2}) is ranked (rnk) according to the weighted proximity computed for the IoT-data source device (DSOD_{IoT,1}, DSOD_{IoT,2}),
**a2)** the IoT-data source device (DSOD_{IoT,1}, DSOD_{IoT,2}) being ranked highest is selected (slc), its IoT-data source device data via the communication link (COL) is fetched, in particular by a PUSH- or PULL transmission mechanism, and the fetched data is used for the configuration of the IoT-data sink device (DSID_{IoT}) due to its commissioning or to adapt or retire and replace current IoT-data sink device data of the IoT-data sink device (DSID_{IoT}).

8. IoT-data sink device (DSID_{IoT}) according to claim 7, **characterized in that**
the location information (INF_{loc}) and the data quality attribute information (INF_{dqa}) are described in a common format, such as "Web Of Things <WOT>", "Building Information Modeling <BIM>" or "lndustry Foundation Classes <WOT>", which is understood both by the IoT-data source device (DSOD_{IoT,1}, DSOD_{IoT,2}) and by the IoT-data sink device (DSID_{IoT}).

9. IoT-data sink device (DSID_{IoT}) according to claim 7 or 8, **characterized in that**
the formed functional unit (FTU) repeats (rpt) the steps **a1)** to **a2)** in order to dynamically capture at least one new IoT-data source device joining the IoT-network (NW_{IoT}).

10. IoT-data sink device (DSID_{IoT}) according to one of the claims 7 to 9, **characterized in that**
the IoT-network (NW_{IoT}) with the at least one IoT-data source device (DSOD_{IoT,1}, DSOD_{IoT,2}) and the IoT-data sink device (DSID_{IoT}) communicating with each other via the communication link is a wireless peer-to-peer-network.

11. IoT-data sink device (DSID_{IoT}) according to one of the claims 7 to 10, **characterized in that** the IoT-data sink device (DSID_{IoT}) is a thermostat.

## Patentansprüche

1. Computerimplementiertes Verfahren zur Verwaltung von Netzkonstruktionsänderungen eines IoT-Netzwerkes (NW_{IoT}) mit mindestens einer IoT-Datenquellenvorrichtung (DSOD_{IoT},₁, DSOD_{IoT},₂), in dem
- die Netzkonstruktion aufgrund der Inbetriebnahme einer IoT-Datensenkenvorrichtung (DSID_{IoT}) innerhalb des IoT-Netzwerkes (NW_{IoT}) änderbar ist, durch Konfigurieren der in Betrieb zu nehmenden IoT-Datensenkenvorrichtung (DSID_{IoT}) oder durch Anpassen oder Zurückziehen und Ersetzen von aktuellen Daten der IoT-Datensenkenvorrichtung (DSID_{IoT}),
- innerhalb des IoT-Netzwerkes (NW_{IoT}) zwischen der mindestens einen IoT-Datenquellenvorrichtung (DSOD_{IoT},₁, DSOD_{IoT},₂) und der IoT-Datensenkenvorrichtung (DSID_{IoT}) jeweils eine Kommunikationsverbindung (COL) direkt oder indirekt über eine Broker-Vorrichtung (BRD) des IoT-Netzwerkes (NW_{IoT}) existiert, **gekennzeichnet durch**:
**a)** Priorisieren (prt) von Informationen über einen Standort (INF_{loc}) der IoT-Datenquellenvorrichtung (DSOD_{IoT},₁, DSOD_{IoT},₂) und von Informationen über Qualitätsattribute von IoT-Datenquellenvorrichtungsdaten (INF_{dqa}), die durch jede IoT-Datenquellenvorrichtung (DSOD_{IoT},₁, DSOD_{IoT,2}) bezogen werden und von jeder IoT-Datenquellenvorrichtung (DSOD_{IoT},₁, DSOD_{IoT,2}) über die Kommunikationsverbindung (COL), insbesondere durch einen PUSH- oder PULL-Übertragungsmechanismus, angefordert (req) und abgerufen (ftc) werden, mit einem Priorisierungsalgorithmus (PRA), sodass
**a1**) eine gewichtete Näherungsmetrik basierend auf den Standortinformationen (INF_{loc}) und den Datenqualitätsattributinformationen (INF_{dqa}) der jeweiligen IoT-Datenquellenvorrichtung berechnet wird, wobei die Standortinformationen und die Datenqualitätsattributinformationen Eingabeparametern entsprechen, wobei Gewichte für jeden Eingabeparameter des Priorisierungsalgorithmus für die IoT-Datensenkenvorrichtung (DSID_{IoT}) vorkonfiguriert sind,
**a2)** jede IoT-Datenquellenvorrichtung (DSOD_{IoT},₁, DSOD_{IoT,2}) gemäß der gewichteten Näherungsmetrik eingestuft (rnk) wird, die für die IoT-Datenquellenvorrichtung (DSOD_{IoT},₁, DSOD_{IoT},₂) berechnet wird,
**b)** Auswählen (slc) der am höchsten eingestuften IoT-Datenquellenvorrichtung (DSOD_{IoT},₁, DSOD_{IoT},₂), von der ihre IoT-Datenquellenvorrichtungsdaten über die
Kommunikationsverbindung (COL), insbesondere durch einen PUSH-oder PULL-Übertragungsmechanismus, abgerufen werden, und wobei die abgerufenen Daten verwendet werden, um die IoT-Datensenkenvorrichtung (DSID_{IoT}) aufgrund ihrer Inbetriebnahme zu konfigurieren oder aktuelle IoT-Datensenkenvorrichtungsdaten der IoT-Datensenkenvorrichtung (DSID_{IoT}) anzupassen oder zurückzuziehen und zu ersetzen.

2. Computerimplementiertes Verfahren nach Anspruch 1, **dadurch gekennzeichnet, dass**
die Standortinformationen (INF_{loc}) und die Datenqualitätsattributinformationen (INF_{dqa}) in einem gemeinsamen Format beschrieben werden, wie etwa "Web Of Things" <WOT>, "Building Information Modeling" <BIM> oder "Industry Foundation Classes" <WOT>, das sowohl von der IoT-Datenquellenvorrichtung (DSOD_{IoT},₁, DSOD_{IoT,2}) als auch von der IoT-Datensenkenvorrichtung (DSID_{IoT}) verstanden wird.

3. Computerimplementiertes Verfahren nach Anspruch 1 oder 2, **dadurch gekennzeichnet, dass**
die Schritte **a)** bis **b)** wiederholt (rpt) werden, um mindestens eine neue IoT-Datenquellenvorrichtung, die dem IoT-Netzwerk (NW_{IoT}) beitritt, dynamisch zu erfassen.

4. Computerimplementiertes Verfahren nach einem der Ansprüche 1 bis 3, **dadurch gekennzeichnet, dass**
das IoT-Netzwerk (NW_{IoT}) mit der mindestens einen IoT-Datenquellenvorrichtung (DSOD_{IoT},₁, DSOD_{IoT},₂) und der IoT-Datensenkenvorrichtung (DSID_{IoT}), die miteinander über die Kommunikationsverbindung (COL) kommunizieren, ein drahtloses Peer-to-Peer-Netzwerk ist.

5. Computerimplementiertes Verfahren nach einem der Ansprüche 1 bis 4, **dadurch gekennzeichnet, dass**
die IoT-Datenquellenvorrichtung (DSOD_{IoT},₁, DSOD_{IoT},₂) ein Temperatursensor oder ein Feuchtigkeitssensor ist und die IoT-Datensenkenvorrichtung (DSID_{IoT}) ein Thermostat ist.

6. Computerimplementiertes Tool (CIT) zum Ausführen des computerimplementierten Verfahrens nach einem der Ansprüche 1 bis 5, umfassend
- ein nichtflüchtiges, prozessorlesbares Speichermedium (STM), das prozessorlesbare Programmanweisungen eines Programmmoduls (PGM) zum Ausführen des computerimplementierten Verfahrens aufweist, die in dem nichtflüchtigen, prozessorlesbaren Speichermedium (STM) gespeichert sind, und
- einen Prozessor (PRC), der mit dem Speichermedium (STM) verbunden ist und der die prozessorlesbaren Programmanweisungen des Programmmoduls (PGM) ausführt, um das computerimplementierte Verfahren auszuführen.

7. IoT-Datensenkenvorrichtung (DSID_{IoT}) zur Verwaltung von Netzkonstruktionsänderungen eines IoT-Netzwerkes (NW_{IoT}) mit mindestens einer IoT-Datenquellenvorrichtung (DSOD_{IoT},₁, DSOD_{IoT},₂), in dem
- die Netzkonstruktion aufgrund der Inbetriebnahme der IoT-Datensenkenvorrichtung (DSID_{IoT}) innerhalb des IoT-Netzwerkes (NW_{IoT}) änderbar ist, durch Konfigurieren der in Betrieb zu nehmenden IoT-Datensenkenvorrichtung (DSID_{IoT}) oder durch Anpassen oder Zurückziehen und Ersetzen von aktuellen Daten der IoT-Datensenkenvorrichtung (DSID_{IoT}),
- innerhalb des IoT-Netzwerkes (NW_{IoT}) zwischen der mindestens einen IoT-Datenquellenvorrichtung (DSOD_{IoT},₁, DSOD_{IoT,2}) und der IoT-Datensenkenvorrichtung (DSID_{IoT}) jeweils eine Kommunikationsverbindung (COL) direkt oder indirekt über eine Broker-Vorrichtung (BRD) des IoT-Netzwerkes (NW_{IoT}) existiert, **gekennzeichnet durch**:
**a)** eine Steuereinheit (CTU), die mit einer Sende-/Empfangseinheit (TCU) verbunden ist und in der ein computerimplementiertes Tool (CIT) mit
- einem nichtflüchtigen, prozessorlesbaren Speichermedium (STM), das prozessorlesbare Programmanweisungen eines Programmmoduls (PGM) zur Verwaltung von Netzkonstruktionsänderungen des IoT-Netzwerkes (NW_{IoT}) aufweist, die in dem nichtflüchtigen, prozessorlesbaren Speichermedium (STM) gespeichert sind,
- einem Prozessor (PRC), der mit dem Speichermedium (STM) verbunden ist und der die prozessorlesbaren Programmanweisungen des Programmmoduls (PGM) ausführt, um Netzkonstruktionsänderungen des IoT-Netzwerkes (NW_{IoT}) zu verwalten, implementiert oder hochladbar ist, wobei das computerimplementierte Tool (CIT) der Steuereinheit (CTU) und die Sende-/Empfangseinheit (TCU) eine funktionale Einheit (FTU) bilden, sodass
**a1**) Informationen über einen Standort (INF_{loc}) der IoT-Datenquellenvorrichtung (DSOD_{IoT},₁, DSOD_{IoT},₂) und Informationen über Qualitätsattribute von IoT-Datenquellenvorrichtungsdaten (INF_{dqa}), die durch jede IoT-Datenquellenvorrichtung (DSOD_{IoT},₁, DSOD_{IoT},₂) bezogen werden und über die Sende-/Empfangseinheit (TCU) von jeder IoT-Datenquellenvorrichtung (DSOD_{IoT},₁, DSOD_{IoT},₂) über die Kommunikationsverbindung (COL), insbesondere durch einen PUSH- oder PULL-Übertragungsmechanismus, angefordert (req) und abgerufen (ftc) werden, innerhalb der Steuereinheit (CTU) priorisiert (prt) werden, wobei das computerimplementierte Tool (CIT) einen Priorisierungsalgorithmus (PRA) ausführt, sodass
**a11**) eine gewichtete Näherungsmetrik basierend auf den Standortinformationen (INF_{loc}) und den Datenqualitätsattributinformationen (INF_{dqa}) der jeweiligen IoT-Datenquellenvorrichtung berechnet wird, wobei die Standortinformationen und die Datenqualitätsattributinformationen Eingabeparametern entsprechen, wobei Gewichte für jeden Eingabeparameter des Priorisierungsalgorithmus für die IoT-Datensenkenvorrichtung (DSID_{IoT}) vorkonfiguriert sind,
**a12**) jede IoT-Datenquellenvorrichtung (DSOD_{IoT},₁, DSOD_{IoT,2}) gemäß der gewichteten Näherung eingestuft (rnk) wird, die für die IoT-Datenquellenvorrichtung (DSOD_{IoT},₁, DSOD_{IoT,2}) berechnet wird,
**a2)** die IoT-Datenquellenvorrichtung (DSOD_{IoT},₁, DSOD_{IoT},₂), die am höchsten eingestuft ist, ausgewählt (slc) wird, ihre IoT-Datenquellenvorrichtungsdaten über die Kommunikationsverbindung (COL), insbesondere durch einen PUSH- oder PULL-Übertragungsmechanismus, abgerufen werden, und die abgerufenen Daten für die Konfiguration der IoT-Datensenkenvorrichtung (DSID_{IoT}) aufgrund ihrer Inbetriebnahme verwendet werden, oder um aktuelle IoT-Datensenkenvorrichtungsdaten der IoT-Datensenkenvorrichtung (DSID_{IoT}) anzupassen oder zurückzuziehen und zu ersetzen.

8. IoT-Datensenkenvorrichtung (DSID_{IoT}) nach Anspruch 7, **dadurch gekennzeichnet, dass**
die Standortinformationen (INF_{loc}) und die Datenqualitätsattributinformationen (INF_{dqa}) in einem gemeinsamen Format beschrieben werden, wie etwa "Web Of Things" <WOT>, "Building Information Modeling" <BIM> oder "Industry Foundation Classes" <WOT>, das sowohl von der IoT-Datenquellenvorrichtung (DSOD_{IoT},₁, DSOD_{IoT},₂) als auch von der IoT-Datensenkenvorrichtung (DSID_{IoT}) verstanden wird.

9. IoT-Datensenkenvorrichtung (DSID_{IoT}) nach Anspruch 7 oder 8, **dadurch gekennzeichnet, dass**
die gebildete funktionale Einheit (FTU) die Schritte **a1**) bis **a2)** wiederholt (rpt), um mindestens eine neue IoT-Datenquellenvorrichtung, die dem IoT-Netzwerk (NW_{IoT}) beitritt, dynamisch zu erfassen.

10. IoT-Datensenkenvorrichtung (DSID_{IoT}) nach einem der Ansprüche 7 bis 9, **dadurch gekennzeichnet, dass** das IoT-Netzwerk (NW_{IoT}) mit der mindestens einen IoT-Datenquellenvorrichtung (DSOD_{IoT},₁, DSOD_{IoT},₂) und der IoT-Datensenkenvorrichtung (DSID_{IoT}), die miteinander über die Kommunikationsverbindung kommunizieren, ein drahtloses Peer-to-Peer-Netzwerk ist.

11. IoT-Datensenkenvorrichtung (DSID_{IoT}) nach einem der Ansprüche 7 bis 10, **dadurch gekennzeichnet, dass** die IoT-Datensenkenvorrichtung (DSID_{IoT}) ein Thermostat ist.

## Revendications

1. Procédé mis en œuvre par ordinateur pour gérer des changements de structure de réseau d'un réseau d'IDO (NW_{IoT}) avec au moins un dispositif source de données d'IDO (DSOD_{IoT,1}, DSOD_{IOT,2}), dans lequel
- la structure de réseau peut être changée en raison de la mise en service d'un dispositif collecteur de données d'IDO (DSID_{IoT}) au sein du réseau d'IDO (NW_{IoT}) par configuration du dispositif collecteur de données d'IDO (DSID_{IoT}) à mettre en service ou par adaptation ou retrait et remplacement de données actuelles du dispositif collecteur de données d'IDO (DSID_{IoT}),
- au sein du réseau d'IDO (NW_{IoT}), entre chacun de l'au moins un dispositif source de données d'IDO (DSOD_{IoT,1}, DSOD_{IoT,2}) et du dispositif collecteur de données d'IDO (DSID_{IoT}), il existe une liaison de communication (COL), directement ou indirectement via un dispositif courtier (BRD) du réseau d'IDO (NW_{IoT}), **caractérisé par** :
**a)** la priorisation (prt) d'informations relatives à une localisation (INF_{loc}) du dispositif source de données d'IDO (DSOD_{IoT,1}, DSOD_{IoT,2}) et d'informations relatives à des attributs de qualité de données de dispositif source de données d'IDO (INF_{dqa}), qui sont fournies par chaque dispositif source de données d'IDO (DSO_{IoT,1}, DSO_{IoT,2}) et qui sont demandées (req) et récupérées (ftc) depuis chaque dispositif source de données d'IDO (DSOD_{IoT,1}, DSOD_{IoT,2}), via la liaison de communication (COL), notamment par un mécanisme de transmission de type PUSH ou PULL, avec un algorithme de priorisation (PRA) de sorte que
**a1**) une métrique de proximité pondérée soit calculée sur la base des informations de localisation (INF_{loc}) et des informations d'attributs de qualité de données (INF_{dqa}) du dispositif source de données d'IDO respectif, lesdites informations de localisation et lesdites informations d'attributs de qualité de données correspondant à des paramètres d'entrée, dans lequel des poids pour chaque paramètre d'entrée de l'algorithme de priorisation sont préconfigurés pour le dispositif collecteur de données d'IDO (DSID_{IoT}),
**a2)** chaque dispositif source de données d'IDO (DSOD_{IoT,1}, DSOD_{IoT,2}) soit classé (rnk) selon la métrique de proximité pondérée calculée pour le dispositif source de données d'IDO (DSOD_{IoT,1}, DSOD_{IoT,2}),
**b)** la sélection (slc) du dispositif source de données d'IDO (DSOD_{IoT,1}, DSOD_{IOT,2}) classé au rang le plus élevé, à partir duquel ses données de dispositif source de données d'IDO sont récupérées via la liaison de communication (COL), notamment par un mécanisme de transmission de type PUSH ou PULL, et dans lequel les données récupérées sont utilisées pour configurer le dispositif collecteur de données d'IDO (DSID_{IoT}) en raison de sa mise en service ou pour adapter ou retirer et remplacer des données actuelles de dispositif collecteur de données d'IDO du dispositif collecteur de données d'IDO (DSID_{IoT}).

2. Procédé mis en œuvre par ordinateur selon la revendication 1, **caractérisé en ce que**
les informations de localisation (INF_{loc}) et les informations d'attributs de qualité de données (INF_{dqa}) sont décrites dans un format commun, tel que « Web of Things <WOT> », « Building Information Modeling <BIM> » ou « Industry Foundation Classes <WOT> », qui est compris à la fois par le dispositif source de données d'IDO (DSOD_{IoT,1}, DSOD_{IoT,2}) et par le dispositif collecteur de données d'IDO (DSID_{IoT}).

3. Procédé mis en œuvre par ordinateur selon la revendication 1 ou 2, **caractérisé en ce que**
les étapes **a)** à **b)** sont répétées (rpt) pour capturer dynamiquement au moins un nouveau dispositif source de données d'IDO rejoignant le réseau d'IDO (NW_{IoT}).

4. Procédé mis en œuvre par ordinateur selon l'une des revendications 1 à 3, **caractérisé en ce que**
le réseau d'IDO (NW_{IoT}) avec l'au moins un dispositif source de données d'IDO (DSOD_{IoT,1}, DSOD_{IoT,2}) et le dispositif collecteur de données d'IDO (DSID_{IoT}) communiquant entre eux via la liaison de communication (COL), est un réseau pair à pair sans fil.

5. Procédé mis en œuvre par ordinateur selon l'une des revendications 1 à 4, **caractérisé en ce que**
le dispositif source de données d'IDO (DSOD_{IoT,1}, DSOD_{IoT,2}) est un capteur de température ou un capteur d'humidité, et le dispositif collecteur de données d'IDO (DSID_{IoT}) est un thermostat.

6. Outil mis en œuvre par ordinateur (CIT) pour réaliser le procédé mis en œuvre par ordinateur selon l'une des revendications 1 à 5, comprenant
- un support de stockage (STM) non transitoire lisible par processeur ayant des instructions de programme lisibles par processeur d'un module de programme (PGM) pour réaliser le procédé mis en œuvre par ordinateur, stockées dans le support de stockage (STM) non transitoire lisible par processeur, et
- un processeur (PRC) connecté au support de stockage (STM) exécutant les instructions de programme lisibles par processeur du module de programme (PGM) pour réaliser le procédé mis en œuvre par ordinateur.

7. Dispositif collecteur de données d'IDO (DSID_{IoT}) pour gérer des changements de structure de réseau d'un réseau d'IDO (NW_{IoT}) avec au moins un dispositif source de données d'IDO (DSOD_{IoT,1}, DSOD_{IOT,2}), dans lequel
- la structure de réseau peut être changée en raison de la mise en service du dispositif collecteur de données d'IDO (DSID_{IoT}) au sein du réseau d'IDO (NW_{IoT}), par configuration du dispositif collecteur de données d'IDO (DSID_{IoT}) à mettre en service ou par adaptation ou retrait et remplacement de données actuelles du dispositif collecteur de données d'IDO (DSID_{IoT}),
- au sein du réseau d'IDO (NW_{IoT}), entre chacun de l'au moins un dispositif source de données d'IDO (DSOD_{IoT,1}, DSOD_{IoT,2}) et du dispositif collecteur de données d'IDO (DSID_{IoT}), il existe une liaison de communication (COL), directement ou indirectement via un dispositif courtier (BRD) du réseau d'IDO (NW_{IoT}), **caractérisé par** :
**a)** une unité de commande (CTU), qui est connectée à une unité émettrice-réceptrice (TCU) et dans laquelle un outil mis en œuvre par ordinateur (CIT) avec
- un support de stockage (STM) non transitoire lisible par processeur ayant des instructions de programme lisibles par processeur d'un module de programme (PGM) pour gérer des changements de structure de réseau du réseau d'IDO (NW_{IoT}), stockées dans le support de stockage (STM) non transitoire lisible par processeur,
- un processeur (PRC) connecté au support de stockage (STM) exécutant les instructions de programme lisibles par processeur du module de programme (PGM) pour gérer les changements de structure de réseau du réseau d'IDO (NW_{IoT}), est mis en œuvre ou téléchargeable, dans lequel l'outil mis en œuvre par ordinateur (CIT) de l'unité de commande (CTU) et l'unité émettrice-réceptrice (TCU) forment une unité fonctionnelle (FTU) de sorte que
**a1**) des informations relatives à une localisation (INF_{loc}) du dispositif source de données d'IDO (DSOD_{IoT,1}, DSOD_{IoT,2}) et des informations relatives à des attributs de qualité de données de dispositif source de données d'IDO (INF_{dqa}), qui sont fournies par chaque dispositif source de données d'IDO (DSOD_{IoT,1}, DSOD_{IoT,2}) et qui sont demandées (req) et récupérées (ftc) via l'unité émettrice-réceptrice (TCU) à partir de chaque dispositif source de données d'IDO (DSOD_{IoT,1}, DSOD_{IoT,2}), via la liaison de communication (COL), notamment par un mécanisme de transmission de type PUSH ou PULL, soient priorisées (prt) au sein de l'unité de commande (CTU) avec l'outil mis en œuvre par ordinateur (CIT) exécutant un algorithme de priorisation (PRA) de sorte que
**a11**) une métrique de proximité pondérée soit calculée sur la base des informations de localisation (INF_{loc}) et des informations d'attributs de qualité de données (INF_{dqa}) du dispositif source de données d'IDO respectif, lesdites informations de localisation et lesdites informations d'attributs de qualité de données correspondant à des paramètres d'entrée, dans lequel des poids pour chaque paramètre d'entrée de l'algorithme de priorisation sont préconfigurés pour le dispositif collecteur de données d'IDO (DSID_{IoT}),
**a12**) chaque dispositif source de données d'IDO (DSOD_{IoT,1}, DSOD_{IoT,2}) soit classé (rnk) selon la métrique de proximité pondérée calculée pour le dispositif source de données d'IDO (DSOD_{IoT,1}, DSOD_{IoT,2}),
**a2)** le dispositif source de données d'IDO (DSOD_{IoT,1}, DSOD_{IoT,2}) qui est classé le plus élevé soit sélectionné (slc), ses données de dispositif source de données d'IDO soient récupérées via la liaison de communication (COL), notamment par un mécanisme de transmission de type PUSH ou PULL, et les données récupérées soient utilisées pour la configuration du dispositif collecteur de données d'IDO (DSID_{IoT}) en raison de sa mise en service ou pour adapter, retirer et remplacer des données actuelles de dispositif collecteur de données d'IDO du dispositif collecteur de données d'IDO (DSID_{IoT}).

8. Dispositif collecteur de données d'IDO (DSID_{IoT}) selon la revendication 7, **caractérisé en ce que**
les informations de localisation (INF_{loc}) et les informations d'attributs de qualité de données (INF_{dqa}) sont décrites dans un format commun, tel que « Web of Things <WOT> », « Building Information Modeling <BIM> » ou « Industry Foundation Classes <WOT> », qui est compris à la fois par le dispositif source de données d'IDO (DSOD_{IoT,1}, DSOD_{IoT,2}) et par le dispositif collecteur de données d'IDO (DSID_{IoT}).

9. Dispositif collecteur de données d'IDO (DSID_{IoT}) selon la revendication 7 ou 8, **caractérisé en ce que**
l'unité fonctionnelle (FTU) formée répète (rpt) les étapes **a1**) à **a2)** afin de capturer dynamiquement au moins un nouveau dispositif source de données d'IDO rejoignant le réseau d'IDO (NW_{IoT}).

10. Dispositif collecteur de données d'IDO (DSID_{IoT}) selon l'une des revendications 7 à 9, **caractérisé en ce que**
le réseau d'IDO (NW_{IoT}) avec l'au moins un dispositif source de données d'IDO (DSOD_{IoT,1}, DSOD_{IoT,2}) et le dispositif collecteur de données d'IDO (DSID_{IoT}) communiquant entre eux via la liaison de communication est un réseau pair à pair sans fil.

11. Dispositif collecteur de données d'IDO (DSID_{IoT}) selon l'une des revendications 7 à 10, **caractérisé en ce que**
le dispositif collecteur de données d'IDO (DSID_{IoT}) est un thermostat.
